# EUROPEAN PATENT SPECIFICATION

(11) **EP 2 342 980 B1**
(45) Date of publication and mention of the grant of the patent: **30.05.2012**
(21) Application number: 10380002.5
(22) Date of filing: 11.01.2010
(51) Int. Cl.: A23L 1/36, A23L 2/38

(54) **Process for the preparation of a beverage from nuts**
Verfahren zur Herstellung eines Nussgetränks
Procédé de fabrication d'une boisson à noix

(43) Date of publication of application: 13.07.2011
(73) Proprietor: Liquats Vegetals SA, Girona (ES)
(72) Inventor: Erra Serrabasa, Josep Maria, 17406 Viladrau (Girona) (ES)
(74) Representative: Gislon, Gabriele

(56) References cited:
- ES-A1- 2 040 654
- ES-A1- 2 095 806
- US-A- 2 511 119
- US-A- 6 153 247

## Description

### Technical Field

The present invention relates to a method for the preparation of a drinkable vegetable food product, with good organoleptic and nutritive properties, obtained from nuts, taking advantage of the high nutritive value food properties, and the supply of proteins, carbohydrates, minerals and vitamins well known in such nuts.

In the method of the invention for the preparation of said beverage, almonds, hazelnuts and walnuts, either nuts of one and the same type or a combination thereof, are used.

### Background of the Invention

Patent ES-A-360032 relates to a method for the preparation of sterilizable nut milks, particularly almond or coconut milk that can be preserved, in which the nuts are ground or grated to obtain a powder having a grain size of the order of 10 microns and which is intended for being added to water to obtain an emulsion, adding to said emulsion a stabilizing emulsion consisting of pectin and water.

Patent ES-A-2116916 relates to a beverage based on almonds, water and sweeteners and a method for obtaining it, comprising a step of mixing the raw materials (almonds with sxeetener) and one part of water, removing the air contained in the mentioned mixture, homogenizing the mixture without air until obtaining a cream, adding the remaining water, removing the air from the last mixture and homogenizing the mixture without air until obtaining a beverage. In the method of this patent, the beverage is not centrifuged for which reason the level of sediment in the package can be considerable. Furthermore a beverage based only on nuts is not obtained because the almond is directly crushed, the latter being homogenized with sweetener and/or without stabilizing additive.

Patent ES-A-2095808 relates to a beverage based on almonds and to a method for the preparation of said beverage, ready for consumption, with water activity greater than 0.75 and a long preservation period, which is provided for being supplied directly to the consumer. As in ES-A-360032, to obtain said beverage a mixture of almonds is milled and in a second phase by means of a centrifuging process, the insoluble fractions are separated and the supernatant is sweetened and the remaining water is incorporated to it, furthermore adding pH-correcting substances until reaching a pH value comprised between 6.0 and 7.4 and a solution formed by water and an emulsifier. A beverage based only on nuts is not obtained in this patent because sweetener has been added before stabilizing it with the emulsifier.

In ES 2040654 the nuts are in part previously pressed to extract oil (col.2 lines 15-20) and the pressed nuts are mixed with not-pressed nuts. The mixed nuts are treated with water and fed to a colloidal mill. There is no centrifugation of the ground nuts, the milk is homogenized and subsequently concentrated and preferably dried to prepare a dry milk powder.

Other disclosures of beverages based on nuts ground and mixed with water and other components, and of the corresponding obtaining methods can be found in documents CN-A-1559304, CN-A-1209303 and CN-A-1063207. In the methods of these patents, the nuts are generally subjected to a first phase of soaking. In the associated methods, a centrifugation for removing the insoluble or no: readily soluble parts is nor performed.

Document CN-A-1370402 describes a beverage based on crushed walnuts, emulsifiers, stabilizers, antioxidants, sweeteners, aromas and preservatives and a method for obtaining it.

The invention provides improvements relating to the mentioned methods, leading to an increase in the proportion of nut in the beverage and a longer shelf life of the product, without the presence of phase separations. The method of this invention allows a more complete and proportional extraction than what it would be with the untreated nut, obtaining carbohydrates, fiber, oils (fat) vitamins and minerals.

### Detailed Description of the Invention

The method of this invention comprises the following phases:
a) joint milling in a colloidal mill the whole, crushed or powder nut (almond, hazelnut or walnut) with water at a controlled temperature, between 75-90°C, and a previously prepared solution of water with an emulsifier, perfectly metered throughout the milling process;
b) homogenizing the paste consisting of water, nut and emulsifier at pressures comprised between 185-215 bar;
c) centrifuging the paste obtained with separation of the resulting soluble emulsified liquid and the non-soluble paste which is obtained as a byproduct of the process;
d) cooling the liquid obtained for its storage in a tank; and
e) regulating the pH between 7.3 and 7.8 with a pH regulator chosen from the group comprising sodium carbonates, potassium carbonates, sodium hydroxides or potassium diphosphates.

The pre-solution of water with emulsifier starts to be metered prior to introducing the almond in the colloidal mill, to assure that whenever water and almond enter the mill, there will be a sufficient amount of emulsifier so as to allow suitably binding the emulsion formed therein. The solution of emulsifier also ends up being metered after loading all the almond in the colloidal mill to assure the stability of the beverage obtained in this first phase.

The water which is used in the mentioned first phase a) of the method is not a reduced proportion as is generally the case in the patents of the mentioned background, but rather it can comprise 85-95% of the water contained in the final beverage. This amount of water and the required metering of water, emulsifier and dry product from the beginning to the end of the process always with all the ingredients provide a very complete emulsion.

The amount of water to be added, normally, at the end, to adjust the proportions will thus be of the order of 5 to 10% of the total water content of the beverage obtained.

Although only a single nut from a single variety will generally be used, it is possible to implement the method of the invention with the use of two or three nuts, in equal or different proportions.

The homogenization performed in step b), i.e., in the initial moment of formation of the paste consisting of water, nut and emulsifier, and under the mentioned pressure conditions, allows increasing the yield of the beverage, since it is better emulsified and the nut is better solubilized, obtaining a subsequent richer liquid phase in said nut.

In addition to allow obtaining a good emulsion of the mentioned starting materials based on mechanical energy, this homogenization allows extending the shelf life of the product without phase separations occurring. This is possible due to the formation of much smaller fat micelles which have more difficulty in binding again to form oil drops.

Step a) of milling is performed preferably at a temperature of 85°C.

Step b) of homogenizing is advantageously performed at pressures of 190-210 bars of pressure.

Soybean or sunflower lecithin is used preferably as an emulsifier.

In an embodiment for obtaining the beverage, between 3-5% almond, 0.5 to 2.5 emulsifier, 7.5-12% sugar or fructose and water up to 100% are crushed, providing a total dry matter of 7-8%.

Steps a) to c) can be continuously performed, so that the method comprises a step of milling with homogenization and centrifugation.

By means of the previously mentioned steps a)-e), a basic beverage to which other ingredients can be added, if desired, to give to it a type of finishing, but which can be used directly in said state is obtained.

In the previously mentioned methods of the state of the art, centrifugation is carried out before or the ingredients are added in a previous stage, therefore this basic beverage consisting of nuts, water and emulsifier, to which other ingredients can be added, is not obtained.

It is thus possible to add to said basic beverage separately or together:
i. artificial sweetening ingredients (from the group of acesulfame K, aspartame, sucralose) or natural sweetening ingredients, such as sucrose or fructose or glucose syrups of corn, wheat, rice or agave;
ii. sources of calcium with stabilizers from the group of hydrocolloids, preferably carrageenans, xanthan gum, gellan gum;
iii. powder cocoa or soluble coffee or soluble cereals in proportions of 0.5-3%

The step of preparing the drinkable food product further comprises a UHT heat treatment at temperatures comprised between 140-150°C, preferably at 144°C and with a retention time of 2 seconds under a homogenizing pressure between 40 and 250 bars.

Finally it is aseptically packaged in package such as Tetrabrik.

## Claims

1. A method for the preparation of a beverage from nuts, comprising the following phases:
a) joint milling in a colloidal mill whole, crushed or powder nut with water at a controlled temperature, between 75-90°C, and a previously prepared solution of water with an emulsifier;
b) homogenizing the paste consisting of water, nut and emulsifier at pressures comprised between 185-215 bars;
c) centrifuging the paste obtained with separation of the resulting soluble emulsified liquid and the non-soluble paste which is obtained as a byproduct of the process;
d) cooling the liquid obtained for its storage in a tank; and
e) regulating the pH between 7.3 and 7.8 with a pH regulator chosen from the group comprising sodium carbonates, potassium carbonates or potassium diphosphates to provide a basic beverage that can be used directly.

2. The method according to claim 1, **characterized in that** said solution of water with an emulsifier is metered and controlled throughout the entire milling of the nut, including a first supply of water and emulsifier before the whole nut will be introduced in the colloidal mill.

3. The method according to claim 1, **characterized in that** the water used in said first phase is of the order of 85-95% of the total water of the final beverage.

4. The method according to claim 1, **characterized in that** said nuts are chosen from almond, hazelnut or walnut.

5. The method according to claim 4, **characterized in that** a single class and variety of nut is used.

6. The method according to claim 4, **characterized in that** several varieties of one and the same nut are chosen.

7. The method according to claim 4, **characterized in that** at least two nuts different from those mentioned are used.

8. The method according to claim 1, **characterized in that** step a) of milling is performed preferably at a temperature of approximately 85°C.

9. The method according to claim 1, **characterized in that** step b) of homogenizing is advantageously performed at pressures of 190-210 bars of pressure.

10. The method according to claim 1, **characterized in that** soybean or sunflower lecithin is preferably used as an emulsifier.

11. The method according to claim 1, **characterized in that** in said initial step a), said nut is present in 3-5%, the emulsifier between 0.5 to 2.5% and the water up to 100%.

12. The method according to claim 1, **characterized in that** artificial sweetening ingredients chosen from the group of acesulfame K, aspartame, sucralose or natural sweetening ingredients such as sucrose or fructose or glucose syrups of corn, wheat, rice or agave are added to said basic beverage.

13. The method according to claim 1, **characterized in that** sources of calcium with stabilizers from the group of hydrocolloids, for example, carrageenans, xanthan gum, gellan gum, are added to said basic beverage.

14. The method according to claim 1, **characterized in that** powder cocoa or soluble coffee or soluble cereals are added to said basic beverage in proportions of 0.5-3%.

15. The method according to any one of claims 1, 10, 11 or 12, **characterized in that** it comprises a UHT heat treatment at temperatures comprised between 140-150°C and with a retention time of 2 seconds under a homogenizing pressure between 40 and 250 bar followed by aseptic packaging.

## Patentansprüche

1. Verfahren für die Zubereitung eines Getränks aus Nüssen, umfassend folgende Schritte:
a) das gemeinsame Mahlen in einer kolloidalen Mühle der ganzen Nuss, der zerkleinerten Nuss oder des Nusspulvers mit Wasser bei geregelter Temperatur, zwischen 75-90°C, und einer vorher zubereiteten Lösung aus Wasser und einem Emulgator;
b) das Homogenisieren der Paste bestehend aus Wasser, Nüsse und Emulgator bei Drücken von zwischen 185-215 bar;
c) das Zentrifugieren der erzeugten Paste mit Trennung der erhaltenen löslichen emulgierten Flüssigkeit und der unlöslichen Paste, welche als Prozessnebenprodukt erzeugt wird;
d) das Abkühlen lassen der erzeugten Paste, um diese in einem Behälter aufzubewahren; und
e) das Regulieren des pH-Werts zwischen 7,3 und 7,8 mit einem pH-Regulator ausgewählt aus der Gruppe umfassend Natriumcarbonate, Kaliumcarbonate oder Kaliumdiphosphate,
um ein gleich verwendbares Grundgetränk bereitzustellen.

2. Verfahren nach Anspruch 1, **dadurch gekennzeichnet, dass** die genannte Lösung aus Wasser und einem Emulgator während der ganzen Mahlung der Nüsse dosiert und reguliert wird, einschließlich einer ersten Versorgung von Wasser und Emulgator bevor die ganze Nuss in die kolloidale Mühle eingeführt wird.

3. Verfahren nach Anspruch 1, **dadurch gekennzeichnet, dass** das in dem genannten ersten Schritt verwendete Wasser 85-95% des ganzen Wassers des Endgetränks ausmacht.

4. Verfahren nach Anspruch 1, **dadurch gekennzeichnet, dass** die genannten Nüsse aus Mandeln, Hasselnüssen oder Walnüssen ausgewählt werden.

5. Verfahren nach Anspruch 4, **dadurch gekennzeichnet, dass** eine einzige Klasse und Art von Nüssen verwendet wird.

6. Verfahren nach Anspruch 4, **dadurch gekennzeichnet, dass** mehrere Arten von derselben Nuss ausgewählt werden.

7. Verfahren nach Anspruch 4, **dadurch gekennzeichnet, dass** mindestens zwei Nüsse verwendet werden, die sich von den Erwähnten unterscheiden.

8. Verfahren nach Anspruch 1, **dadurch gekennzeichnet, dass** der Schritt a) des Mahlens vorzugsweise bei einer Temperatur von ca. 85°C durchgeführt wird.

9. Verfahren nach Anspruch 1, **dadurch gekennzeichnet, dass** der Schritt b) der Homogenisierung vorteilhaft bei Drücken von 190-210 bar durchgeführt wird.

10. Verfahren nach Anspruch 1, **dadurch gekennzeichnet, dass** vorzugsweise Sojalecithin oder Sonnenblumenlecithin als Emulgator verwendet wird.

11. Verfahren nach Anspruch 1, **dadurch gekennzeichnet, dass** in dem genannten anfänglichen Schritt a), die genannte Nuss in 3-5%, der Emulgator zwischen 0,5 bis 2,5% und, bis zum 100%, Wasser vorliegen.

12. Verfahren nach Anspruch 1, **dadurch gekennzeichnet, dass** zum genannten Grundgetränk künstliche Süßungsmittel ausgewählt aus der Gruppe von Acesulfam-K, Aspartam, Sucralose oder natürliche Süßungsmittel wie beispielsweise Saccharose- oder Fructose- oder Glucose-Sirups aus Mais, Weizen, Reis oder Agave hinzugefügt werden.

13. Verfahren nach Anspruch 1, **dadurch gekennzeichnet, dass** zum genannten Grundgetränk Calciumlieferanten mit Stabilisatoren aus der Gruppe aus Hydrokolloiden, beispielsweise Carrageen, Xanthan-Gummi, Gellan hinzugefügt werden.

14. Verfahren nach Anspruch 1, **dadurch gekennzeichnet, dass** zum genannten Grundgetränk Kakaopulver oder Instant-Kaffee oder Instant-Getreide im Verhältnis von 0,5-3% hinzugefügt werden.

15. Verfahren nach einem der vorstehenden Ansprüchen 1, 10, 11 oder 12, **dadurch gekennzeichnet, dass** es eine UHT-Wärmebehandlung bei Temperaturen zwischen 140-150°C und mit einer Verweilzeit von 2 Sekunden bei einem Homogenisierungsdruck zwischen 40 und 250 bar gefolgt von einer aseptischen Verpackung umfasst.

## Revendications

1. Une méthode pour la préparation d'une boisson de fruits secs comportant les étapes suivantes:
a) moudre ensemble dans un moulin colloïdal des fruits secs entiers, broyés o en poudre avec de l'eau à une température contrôlée, entre 75-90°C et une solution d'eau avec un émulsifiant préparée auparavant;
b) homogénéiser la pâte consistant en de l'eau, des fruits secs et un émulsifiant à des pressions comprises entre 185-215 bars;
c) centrifuger la pâte obtenue en séparant le liquide émulsifié soluble résultant et la pâte non soluble qui est obtenue comme sous-produit du processus;
d) refroidir le liquide obtenu pour le stocker dans un réservoir; et
e) ajuster le pH entre 7.3 et 7.8 avec un régulateur de pH choisi du groupe comprenant des carbonates de sodium, des carbonates de potassium ou des biphosphates de potassium pour donner une boisson basique pouvant être utilisée directement.

2. La méthode conformément à la revendication 1, **caractérisée en ce que** cette solution d'eau avec un émulsifiant est mesurée et contrôlée à travers toute la mouture des fruits secs, comprenant un premier apport d'eau et d'émulsifiant avant que tous les fruits secs aient été introduits dans le moulin colloïdal.

3. La méthode conformément à la revendication 1, **caractérisée en ce que** l'eau utilisée dans cette étape est de l'ordre des 85-95% de l'eau totale de la boisson finale.

4. La méthode conformément à la revendication 1, **caractérisée en ce**s fruits secs sont choisis parmi les amandes, les noisettes ou les noix.

5. La méthode conformément à la revendication 4, **caractérisée en ce qu'**une seule sorte et variété de fruits secs est utilisée.

6. La méthode conformément à la revendication 4, **caractérisée en ce que** plusieurs variétés d'un même fruit sec sont choisies.

7. La méthode conformément à la revendication 4, **caractérisée en ce qu'**au moins deux fruits secs différents parmi ceux indiqués sont utilisés.

8. La méthode conformément à la revendication 1, **caractérisée en ce que** l'étape a) du broyage est effectuée de préférence à une température aux alentours de 85°.

9. La méthode conformément à la revendication 1, **caractérisée en ce que** l'étape b) de l'homogénéisation est avantageusement effectuée aux pressions de 190-210 bars de pression.

10. La méthode conformément à la revendication 1, **caractérisée en ce que** la lécithine de soja ou de tournesol est préférablement utilisée comme émulsifiant.

11. La méthode conformément à la revendication 1, **caractérisée en ce que** dans cette étape initiale a), ce fruit sec est présent en 3-5%, l'émulsifiant entre 0,5 à 2,5% et l'eau jusqu'à 100%.

12. La méthode conformément à la revendication 1, **caractérisée en ce que** des ingrédients édulcorants artificiels choisis du groupe d'acésulfame K, aspartame, sucralose ou des ingrédients édulcorants naturels tels que la sucrose ou fructose ou les sirops de glucose de maïs, blé, riz ou agave sont ajoutés à cette boisson basique.

13. La méthode conformément à la revendication 1, **caractérisée en ce que** des sources de calcium avec des stabilisateurs du groupe des hydrocolloïdes, par exemple, des carraghénanes, gomme de xanthane, gomme de gellane, sont ajoutés à cette boisson basique.

14. La méthode conformément à la revendication 1, **caractérisée en ce que** le cacao en poudre ou le café soluble ou des céréales solubles sont ajoutés à cette boisson basique, dans des proportions de 0,5-3%.

15. La méthode conformément à une quelconque des revendications 1, 10, 11 ou 12, **caractérisée en ce qu'**elle comporte un traitement thermique UHT à des températures comprises entre 140-150° C et un temps de rétention de 2 secondes sous une pression homogénéisante d'entre 40 et 250 bars suivi d'un emballage aseptique.
